# EUROPEAN PATENT APPLICATION

(11) **EP 4 741 602 A1**
(43) Date of publication of application: **13.05.2026**
(21) Application number: 23754814.4
(22) Date of filing: 05.07.2023
(51) Int. Cl.: E04G 9/02, F16B 21/12

(54) **PIN FOR COUPLING AN ACCESSORY TO A FORMWORK PANEL AND SYSTEM COMPRISING SAME**

(71) Applicant: Encofrados J. Alsina, S.A., 08110 Montcada i Reixac (ES)
(72) Inventor: ARDILA LOPEZ, Germán, 08110 MONTCADA I REIXAC (ES); RODILLA MERCADO, Daniel, 08213 POLINYÀ (ES)
(74) Representative: Sugrañes, S.L.P.
(86) International application number: PCT/ES2023/070434
(87) International publication number: WO 2025/008552

(57) **Abstract**

The present invention relates to a pin for coupling an accessory to a formwork panel, comprising a head and an elongated body attached to the head. The elongated body is formed by a cylindrical body and by a flat wedge face which is inclined with respect to the longitudinal axis. The wedge face has a greater width at the lower end and the distance between the wedge face and the opposite cylindrical surface decreases in the direction to the lower end. The elongated body comprises elastic means configured such that, in a standby state in the absence of external forces, a projecting portion of the elastic means protrudes a specific distance from the cylindrical surface of the cylindrical body opposite the wedge face. The invention also relates to a system comprising the pin.

## Description

### Technical field of the invention

The present invention relates to a pin for coupling a construction accessory, for example, a cantilever bracket, a brace, etc., to a formwork panel, and particularly to the rib of a panel. The formwork panel is one of those used in forming concrete structures, and has a formwork face made of a phenolic material board, which is the face that will be in contact with the concrete until it sets and acquires certain strength. Around the formwork face, the panel has a metal frame which provides support to a series of ribs or cross members (horizontal profiles) and uprights (vertical profiles) which are arranged on the face opposite to the formwork face and together form the framework of the panel that has to withstand the stresses to which the panel is subjected during the different phases of concreting.

Preferably, a connecting part intended to be placed in a rib of a panel and designed to collaborate with the pin, both components forming a system for coupling accessories to the framework of the formwork panel, is also disclosed.

**In** particular, the pin is indicated for placement through a cylindrical sleeve or bushing inserted into one of the several holes vertically going through the ribs of a formwork panel, which holes are created for the purpose of hanging virtually any type of accessory from the ribs.

### Background of the invention

Several formwork panel designs are known today. Most formwork panels have a framework formed by a metal frame and several metal profiles arranged horizontally from side to side, called ribs or cross members, and some vertical profiles, called uprights, arranged between two cross members or between a cross member and the frame.

In some of these formwork panels, at least some of the ribs have some through holes in which bushings are inserted. In practice, these holes are used to hang any type of accessory.

In some cases, a pin having a cylindrical body is placed inside the bushing, such that the lower end of the pin is below the rib, and the head of the pin, having a cross-section larger than the cross-section of the hole, is above it. A safety element, for example, an R-shaped pin or wedge, is usually placed going through the lower end of the pin in a hole made to that end, so that the pin cannot disengage from the rib and the accessory to be placed is tied to the formwork panel through a cord attached to the head and to the lower end of the pin which goes through a rib or an upright. Examples of this type of pin are described in patent documents KR20180056176-A and KR10-0955302-B1.

In other cases, the accessories to be coupled to the formwork panel already have ends that are integral with the accessory and have a fork shape, with two elongated, more or less cylindrical protuberances. These two protuberances, which extend vertically in the position of use of the accessory, are inserted into two through holes which the rib already has, and thus the accessory is hung from the rib of the panel. A small hole through which an R-shaped safety pin or similar safety element is placed goes through the lower ends of the two protuberances in order to prevent the fork from coming out of the holes of the rib if the panel moves.

There are also other types of pin- and wedge-based supports which are hung from the ribs or uprights of the panel, but their assembly is cumbersome for the operators and in many cases involves the need to use tools. Sometimes, clips or clamps are used the jaws of which have profiles adapted to the cross-sections of the uprights so that they are held on the panel and the accessories can be hung from same, however, the clips or clamps are not usually conceived for that purpose, but rather to attach the panels to one another by their frames.

To that end, an objective of the present invention is to disclose a simpler alternative the purpose of which is to simplify the assembly of an accessory, enabling it to be hung from a rib of a formwork panel, provided with a hole with a bushing, ensuring the safety of the accessory and the panel at all times.

### Description of the invention

To respond to needs indicated above, a pin for coupling an accessory to a formwork panel is disclosed. The pin comprises a head and an elongated body attached integrally to the head, which extends a certain length until ending in a lower end.

The pin object of the invention is characterized in that the elongated body is formed for the most part by a cylindrical body and by a wedge face, configured as a flat face inclined with respect to the longitudinal axis of the cylindrical body. The inclination of the wedge face is such that the wedge face has a greater width at the lower end than at the end closest to the head of the pin, and such that the distance between the wedge face and the cylindrical surface opposite the wedge face of the elongated body decreases in the direction from the end closest to the head to the lower end. Furthermore, the elongated body comprises elastic means configured such that, in a standby state in the absence of external forces, a projecting portion of the elastic means protrudes a specific distance from the cylindrical surface of the cylindrical body opposite the wedge face.

**It** should be clarified that when reference is made herein to the terms "upper", "lower", "horizontal", and "vertical", it refers to the position occupied by the elements forming the object of the invention when they are in a normal position of use. For example, in this case, the pin object of the invention is intended to be placed perpendicularly with its elongated body going through a horizontal rib that is part of a formwork panel. The formwork panel is understood as being arranged with its formwork surface and its framework surface in a vertical position, and its ribs therefore extend horizontally. Therefore, the pin will be introduced in a vertical position (the axis of the cylindrical body which is part of the elongated body will be arranged parallel to a vertical direction, perpendicular to the horizontal upper face of the rib in which it is coupled). The upper end of the pin, in a position of use, is the end with the head thereof, and the lower end is the end thereof opposite the head.

According to another feature of the invention, the elastic means are also configured such that in a non-standby state in which the projecting portion is subjected to an external compressive force equal to or greater than a predetermined compressive force, all or part of this projecting portion completely or partially enters the inside of the elongated body of the pin, and when said force ceases, the projecting portion of the elastic means returns to its standby state protruding a specific distance from the cylindrical surface of the cylindrical body.

In this way, the pin object of the invention is capable of ensuring its position, being tightly fitted with part of its elongated body going through the bushing of a cylindrical through hole provided in a rib of a formwork panel. The mostly cylindrical part of the elongated body of the pin facilitates the introduction of the pin in the bushing and the wedge face, as it is inserted into the bushing, it causes wedge fitting for the pin to be well interlocked in the bushing.

Furthermore, as a result of the elastic means incorporated in the pin, the possibility of the pin being able to be accidentally removed from the bushing of the rib, for example, if the panel is flipped and placed face down, is prevented, since the protruding portion causes the lower portion of the pin to be unable to go through the bushing in the opposite direction if a specific force is not being applied on the elastic means. For example, by simply hammering the lower end of the pin upwards, the projecting portion of the elastic means would be forced to move closer to the through hole of the rib and to go through same as a result of the shape of the projecting portion, with this portion of the elastic means being subjected to compression. It is also advantageous not to have to resort to additional parts independent of the pin such as safety ins, fasteners, or small wedges to place at them at its lower end to ensure that the pin does not come out of the bushing that surrounds the cylindrical through hole of the rib of the panel.

According to another feature of a preferred embodiment of the pin object of the invention, the elastic means are a linear spring bent in several segments in which the projecting portion which protrudes from the cylindrical surface of the cylindrical body in the standby state has a curved shape with a maximum between two branches of different slope and sign, with the branch closest to the lower end of the elongated body having an absolute slope value smaller than the other branch. The different slope, in absolute value, means that it is easier to introduce the pin in the bushing, for example, manually, than to remove it.

According to another feature of the preferred embodiment of the pin object of the invention, the elongated body comprises in a segment of the cylindrical surface opposite the wedge face a longitudinal slit or slot in which the elastic means are arranged and from which the projecting portion protrudes in the standby state, in the absence of the predetermined force. Preferably, the longitudinal slit or slot penetrates the wedge face going through same. This facilitates the placement of the spring inside the elongated body of the pin.

Optionally, the lower end of the slit or slot is configured with a circular-shaped widening, having dimensions suitable for the passage therethrough of a safety element such as, for example, an R-shaped element or a safety pin, which would go through the lower portion of the pin since said widening is arranged at the end of the slot going through the elongated body from the wedge face to the opposite side.

Preferably, the wedge face has an inclination comprised between 2 and 6 degrees, preferably 4 degrees, with respect to the longitudinal axis of the cylindrical body (the axis containing the centers of the two bases of a cylinder).

According to another feature of the preferred embodiment of the pin, the head of the pin is configured as a cylindrical side surface provided with two curved notches opposite one another, in which one notch is provided on the side of the wedge face and the other notch on the opposite side. The notches have dimensions suitable for supporting two fingers of a user's hand, one finger on each notch, in a position for removing the pin by pulling the head upwards.

According to another optional feature of the preferred embodiment of the pin, the head of the pin has, at its lower end, at which it is attached to the elongated body of the pin, two lower flat stop surfaces, projecting in cantilever fashion from the elongated body of the pin. These stop surfaces favor the pin not being introduced more than necessary in the cylindrical through hole of the rib of the formwork panel, so that the head of the pin is above the upper surface of the rib.

According to a second aspect of the invention, a system for coupling an accessory to a formwork panel provided with a rib having a cylindrical through hole vertically going through same is disclosed. The system is characterized in that it comprises a pin according to the invention described above, and furthermore a connecting part. The connecting part of the system comprises:
- two clamp profiles, flat and parallel to one another, U-shaped, the opening of which has suitable dimensions to receive, by way of fitting, a segment of the front border of a rib of a formwork panel, with the separation distance between the upper arm and the lower arm of the U shape being equal to or greater than the thickness of the rib,
- a first flat attachment plate perpendicular to the two clamp profiles, arranged between the two upper arms of the two clamp profiles to which it is integrally attached, provided with a first through hole with a contour suitable for the passage therethrough of the elongated body of the pin, and
- a second flat attachment plate perpendicular to the two clamp profiles, arranged between the two lower arms of the two clamp profiles to which it is integrally attached, provided with a second through hole with a contour suitable for the passage therethrough of a part of the elongated body of the pin.

The two lower flat stop surfaces of the pin, when the pin is in an operating position, i.e., inserted in the cylindrical through hole of the rib for coupling the accessory to the formwork panel, abut against the upper face of the first attachment plate of the connecting part, in the area surrounding the first through hole of this first plate.

According to another feature of the system object of the invention, the first through hole has a contour formed for the most part by a circular arch segment except for a straight segment having a length equal to the maximum width of the wedge face of the elongated body of the pin, and wherein approximately in the middle of the circular arch segment, the contour has a protuberance having dimensions suitable for the passage therethrough of the most protruding part (the outermost part, the one separated furthest from the surface of the cylindrical body) of the projecting portion of the elastic means of the pin.

According to another feature of the system object of the invention, the second through hole has a circular contour formed for the most part by a circular arch segment except for a straight segment having a length smaller than the length of the straight segment of the contour of the first through hole.

According to another feature of the system object of the invention, the first through hole and the second through hole are offset relative to one another with respect to the straight segments of the contours thereof in accordance with the inclination of the wedge face of the pin, such that an imaginary plane containing the upper edges of the two straight segments is parallel to the plane of the wedge face of the pin.

According to another feature of the system object of the invention, the bottom of the opening of each of the two clamp profiles, formed by the segment of the profile joining the upper arm and the lower arm has a bulge in the central portion thereof towards the inside of the opening. This bulge creates an effect for the quick removal of the connecting part from the rib of the formwork panel.

Optionally, according to another feature of the system object of the invention, each of the two lower arms of the two clamp profiles has an extension in a direction opposite the respective upper arm which is provided with a through hole, which can be used for attachment to a part of the accessory to be placed or for hanging any other element.

The system object of the invention comprises at least one rib of a formwork panel, provided with a cylindrical through hole in a direction perpendicular to the upper surface and to the lower surface of the rib. Advantageously, the cylindrical through hole provided in the rib has a cylindrical bushing arranged inside same, which is the bushing through which the elongated body of the pin passes. The dimensions of the connecting part of the system are in accordance with the dimensions of the thickness or the border of the rib (the distance between the upper surface and the lower surface of the rib), with the distance from the edge of the rib to the cylindrical through hole with the bushing, and with the diameter of the bushing inserted in the cylindrical through hole going through the rib, as will become apparent in the detailed description of the invention.

### Brief description of the drawings

To complement the description that is being made and for the purpose of facilitating the understanding of the features of the pin and the system object of the invention, a set of drawings is attached to the present specification in which the following is depicted in an illustrative and non-limiting manner:
Figures 1 to 6 are different perspective views of the pin object of the invention, with the pin being shown only in Figure 4 with a transparency effect in order to see in detail the placement of the elastic means inside the elongated body of the pin;
Figures 7 to 8 are different perspective views of the system object of the invention, formed by the pin of Figure 1 and by a connecting part coupled to the front portion of a rib of a formwork panel;
Figures 10 to 15 are section views according to a vertical section plane of the system and rib assembly shown in Figure 7, showing the process of placing the system object of the invention;
Figure 16 is an elevational view of a clamping profile of the connecting part which is part of the system object of the invention;
Figure 17 is a section view according to a vertical section plane of the connecting part which is part of the system object of the invention and of the rib shown in Figure 7, with the imaginary plane joining the upper edges of the straight segments of the two through holes of the attachment plates of the connecting part being highlighted;
Figure 18 is a perspective view of an accessory provided with three connecting parts of the system object of the invention for coupling thereof to a formwork panel (not shown);
Figure 19 is an enlarged detailed view of the connecting part of the accessory shown in Figure 18, particularly the connecting part that will be intended to be coupled to an upper rib; and
Figure 20 is an enlarged detailed view of the two connecting parts of the accessory shown in Figure 18 located in the lower portion of the accessory.

### Detailed description of the invention

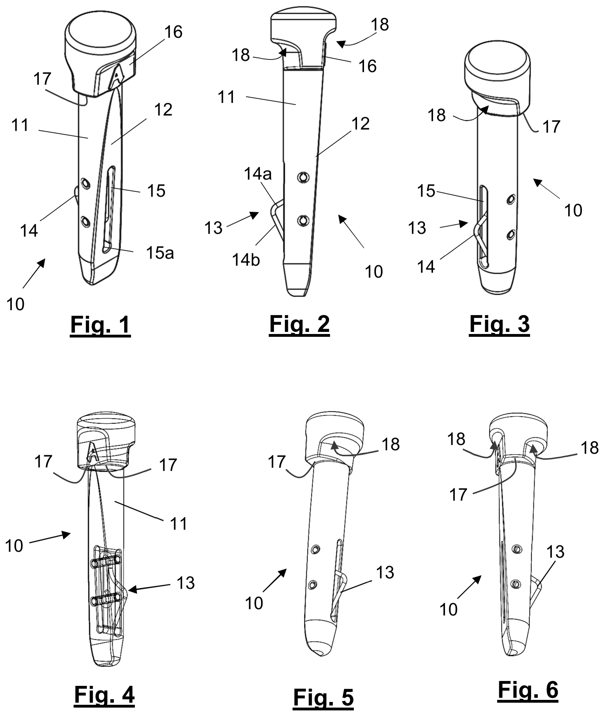

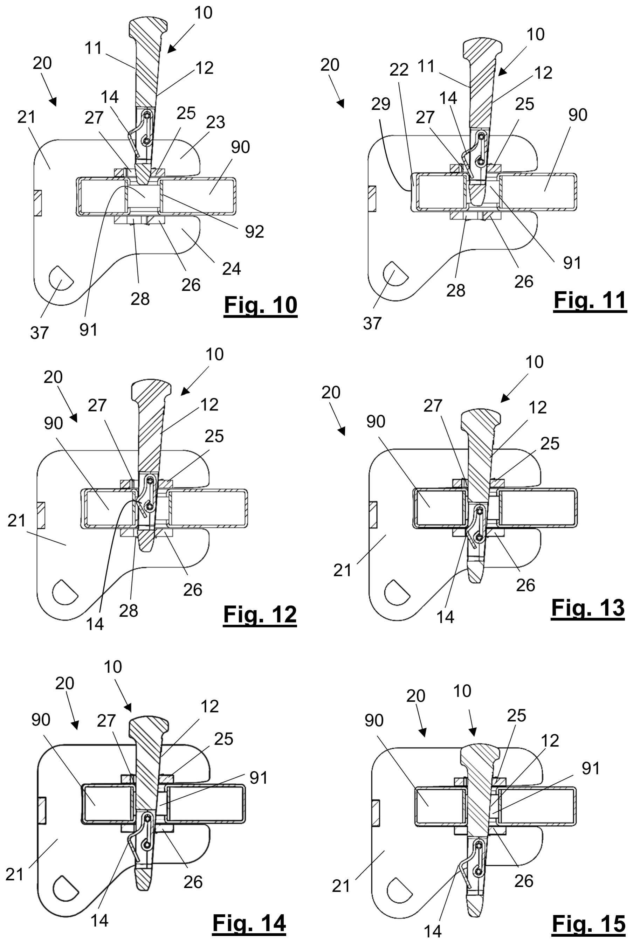

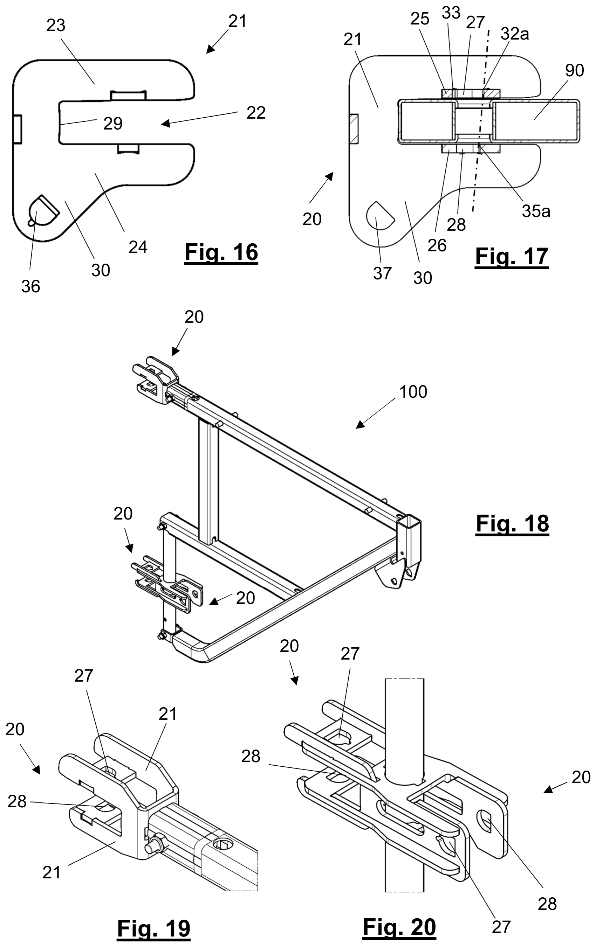

Figures 1 to 6 show different views of a pin 10 used for coupling an accessory 100, for example, the one shown in Figure 18, to a formwork panel (not shown). Specifically, the pin 10 is designed to be coupled to a rib 90 of a formwork panel, going through same when a part of the pin 10 is inserted into a cylindrical through hole 91 which is provided vertically going through the rib 90. Figure 10 shows a cross-section of the rib 90, according to a vertical section plane perpendicular to the length of the rib 90 and going through the cylindrical through hole 91. The cylindrical through hole 91 has therein a cylindrical bushing 92 with open ends.

The pin 10 comprises a head and an elongated body attached integrally to the head, which extends a certain length until ending in a lower end. The elongated body is formed for the most part by a cylindrical body 11 and by a wedge face 12, configured as a flat face inclined with respect to the longitudinal axis of the cylindrical body 11. It can be said that the shape of the elongated body is equivalent to that of a cylinder that had been cut by a plane which forms an acute angle with the longitudinal axis thereof, with the intersection being somewhat below the lower end of the cylinder. In the position of use of the pin 10, the longitudinal axis of the cylindrical body 11 is a vertical axis. The inclination of the wedge face 12 is such that the wedge face 12 has a greater width at the lower end than at the end closest to the head and such that the distance between the wedge face 12 and the cylindrical surface opposite the wedge face of the elongated body decreases towards the lower end. The wedge face 12 has an inclination comprised between 2 and 6 degrees, preferably being 4 degrees, with respect to the longitudinal axis of the cylindrical body 11.

Figure 1 shows that the head of the pin 10 has a flat inclined face 16 coplanar with the wedge face 12, which facilitates the determination of the orientation of the elongated body by touch, knowing on which side the wedge face 12 is arranged by simply touching the flat inclined face 16 of the head, and therefore, facilitates the correct introduction of the pin 10 from the get go. However, in other embodiments of the pin 10, the head may not have that flat inclined face 16. The pin 10 furthermore has a mostly conical final finish or lower tip, but without the entire casing being conical, without the tip protruding beyond the wedge face 12 of the elongated body, so that the entire elongated body of the pin 10 behaves like a wedge when introduced in the cylindrical through hole 91 of the rib 90.

Particularly, Figure 6 shows that the head of the pin 10 is configured as a cylindrical side surface provided with two curved notches 18 opposite one another, in which one notch is provided on the side of the face of the wedge 12 and the other on the opposite side. The curved notches 18 have dimensions suitable for supporting two fingers of a user's hand, one finger on each notch, in a position for removing the pin 10 by pulling the head upwards. The upper surface of the head has a rounded shape which facilitates pushing the pin 10 with hand.

Furthermore, the head of the pin 10 has, at its lower end, at which it is attached to the elongated body of the pin 10, two lower flat stop surfaces 17, projecting in cantilever fashion from the elongated body of the pin 10, on opposite sides of the elongated body.

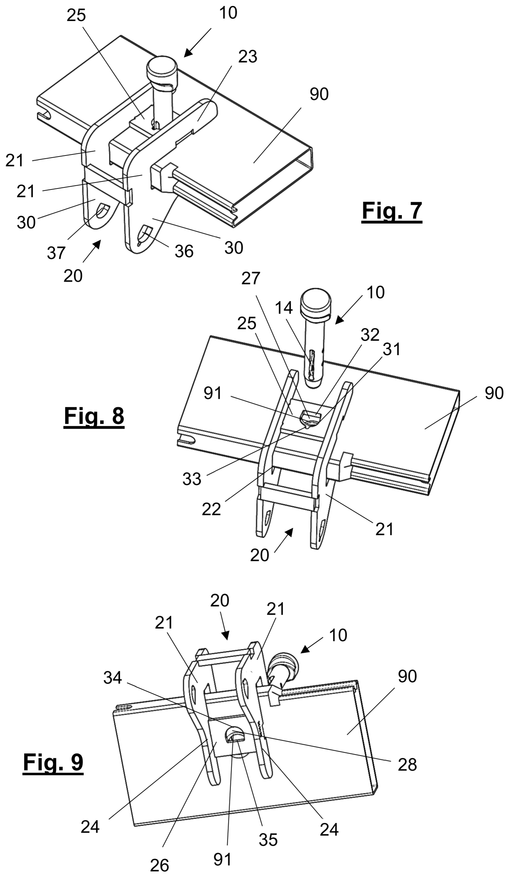

It is worth noting that the elongated body of the pin 10 comprises elastic means 13, formed by a linear spring bent in several segments which in a standby state, in the absence of external forces (see Figures 8, 10, 11, 14, and 15) has a projecting portion 14 protruding a specific distance from the cylindrical surface of the cylindrical body 11 opposite the wedge face 12.

The elastic means 13 are configured such that in a non-standby state (see Figures 12 and 13), in which the projecting portion 14 is subjected to an external compressive force equal to or greater than a predetermined compressive force (when having to pass through the cylindrical through hole 91 with the bushing 92 of the rib 90), all or part of this projecting portion 14 completely or partially enters the inside of the elongated body of the pin 10. When said force ceases, after having completely gone through the cylindrical through hole 91 (see Figures 14 and 15), the projecting portion 14 of the elastic means 13 returns to its standby state protruding a specific distance from the cylindrical surface of the cylindrical body 11. The distance between the outermost part of the projecting portion 14 and the cylindrical surface of the elongated body diametrically opposite the projecting portion 14 is, in the standby state, larger than the diameter of the cylindrical through hole 91 with a bushing 92 provided in the rib 90 of the formwork panel.

Preferably, as observed in Figures 1 to 6, the elastic means 13 are a linear spring bent in several segments. The projecting portion 14 which protrudes from the cylindrical surface of the cylindrical body 11, in a standby position, without being subjected to any compressive force, has a curved shape with a maximum between two branches 14a and 14b of different slope and sign (a positive slope and a negative slope). The projecting portion 14 in the standby state is in the shape of a bend of about 90° with a rounded vertex (see Figure 10). The branch 14b, which is the closest to the lower end of the elongated body of the pin 10, has an absolute slope value that is smaller than the other branch 14a (see Figure 2). The difference between the absolute values of the two slopes favors an introduction of the pin 10 in the cylindrical through hole 91 of the rib 90, from top to bottom (see Figures 11 to 12), that is easier than the removal thereof once the projecting portion 14 has gone through said hole. The branch 14b has a slope value smaller than the branch 14a. The branch 14b is the first part of the projecting portion 14 that encounters the cylindrical through hole 91 when the pin 10 is coupled to the rib 90, the slope of which offers less resistance given that, when being introduced in the hole, the projecting portion 14 is being compressed to be introduced in the bushing 92 of the cylindrical through hole 91. In contrast, if the pin 10 is to be removed upward from the position shown in Figure 14, the branch 14a will have more resistance, as a result of its greater slope, and hammering the lower end of the elongated body of the pin 10 upwards will be required. The slope of the branch 14a thereby contributes to, in a standby position of the elastic means 13 in which the pin 10 has already been coupled to the rib (Figure 15), the pin 10 not becoming uncoupled from the rib 90 if, for example, the formwork panel, comprising the rib 90, is moved from one side to another, no longer being in a vertical position, for example, if the panel is rotated 180° and the head of the pin 10 now faces down and the projecting portion 14 faces up.

The elongated body of the pin 10 comprises, in a segment of the cylindrical surface opposite the wedge face 12, a longitudinal slot 15 in which the elastic means 13 are arranged and from which the projecting portion 14 protrudes in the standby state. This can be seen particularly in Figures 3, 4, and 5. The longitudinal slot 15 penetrates the wedge face 12 going through same, as shown in Figure 1. Figure 1 also shows that the lower end of the slot 15 is provided with a circular-shaped widening 15a, having dimensions suitable for the passage therethrough of a safety element, such as an R-shaped element or a safety pin (not shown). The spring forming the elastic means 13 is assembled with certain play within the slot 15, so that it accommodates what it encounters during the introduction of the pin 10 in the rib 90.

Figures 7 to 15 depict the use of the pin 10 for coupling an accessory 100, such as the one of Figure 18, to a rib 90 of a formwork panel provided with a cylindrical through hole 91 (inside which a bushing 92 can be arranged). To that end, the pin 10 collaborates with a connecting part 20 together with which it forms a system for coupling the accessory 100. The accessory 100 has one or more of these connecting parts 20 (see Figures 18 to 20) in those parts in which coupling to a component of the panel, either a rib 90 or an upright, is sought.

In the accessory 100 of Figure 17, two connecting parts 20 are arranged for being coupled each to a rib 90. Each connecting part 20 will be coupled to a rib 90, hanging from same, upon inserting a corresponding pin 10 which simultaneously goes through a part of the connecting part 20 and the rib 90 through a cylindrical through hole 91, preferably provided with a bushing 92, which the rib 90 already has.

If those connecting parts 20 of the accessory of Figure 18 are rotated 90°, they can be coupled to an upright (vertical profile) of the formwork panel, upon inserting a pin 10 which simultaneously goes through a part of the connecting part 20 and the upright through a cylindrical through hole 91, preferably provided with a bushing 92, which the upright already has. For coupling to the uprights, the elongated body of the pin 10 would be in a horizontal position, going through the upright.

The use of the connecting part 20 and the pin 10 for coupling an accessory 100 to a rib 90 of a formwork panel is described below.

The connecting part 20 shown in Figures 7-15 comprises:
- two flat U-shaped clamp profiles 21 parallel to one another, the opening 22 of which has suitable dimensions to receive, by way of fitting, a segment of the front border of the rib 90, with the separation distance between the upper arm 23 and the lower arm 24 of the U shape being equal to or slightly greater than the thickness of the rib 90,
- a first flat attachment plate 25 perpendicular to the two clamp profiles 21, arranged between the two upper arms 23 of the two clamp profiles 21 to which it is integrally attached, provided with a first through hole 27 with a contour suitable for the passage therethrough of the elongated body of the pin 10, and
- a second flat attachment plate 26 perpendicular to the two clamp profiles 21, arranged between the two lower arms 24 of the two clamp profiles 21 to which it is integrally attached, provided with a second through hole 28 with a contour suitable for the passage therethrough of a part of the elongated body of the pin 10.

As can be seen in Figure 8, the first through hole 27 has a contour formed for the most part by a circular arch segment 31, except for a straight segment 32 having a length equal to the maximum width of the wedge face 12 of the elongated body of the pin 10. Approximately in the middle of the circular arch segment 31, the contour has a protuberance 33 having dimensions suitable for the passage therethrough of the most end part of the projecting portion 14 of the elastic means 13 of the pin 10.

Figure 9 shows how the second through hole 28 has a circular contour formed for the most part by a circular arch segment 34 except for a straight segment 35 having a length smaller than the length of the straight segment 32 of the contour of the first through hole 27. In other words, the second through hole 28 has a contour similar to that of a half moon.

In the connecting part 20, the first through hole 27 and the second through hole 28 are not vertically aligned, but are offset relative to one another with respect to the upper edges 32a, 35a of the straight segments 32, 35 of the contours thereof in accordance with the inclination of the wedge face 12 of the pin 10, such that an imaginary plane containing the two upper edges 32a and 35a of the two straight segments 32, 35 is parallel to the plane of the wedge face 12 of the pin 10, i.e., have the same inclination. This can be seen in Figure 17 in which the imaginary plane has been depicted as a dash-dotted line. The second through hole 28 is smaller than the first through hole 27, since the part of the elongated body having a diameter larger than the pin 10, which is the one closer to the head, will not go through the second through hole.

The protuberance 33 of the first through hole 27 is oriented approximately towards the center of the distance between the bottoms of the openings 22 of the two clamp profiles 21 (see Figure 8). The circular arch segments 31 and 34, at their points opposite the straight segments 32 and 35, respectively and without taking into account the protuberance 33, are indeed vertically aligned, since they must snugly house the cylindrical surface of the elongated body of the pin 10 opposite the wedge face 12, and the cylindrical body 11 of the pin 10 is introduced in a vertical position, with the contour of the cylindrical surface (or the generatrix) perpendicular to the rib 90.

To start the coupling to the rib 90, the connecting part 20 must be placed such that the first through hole 27 and the second through hole 28 partially overlap the cylindrical through hole 91 of the rib 90.

In Figure 16 it can be seen that the bottom of the opening 22 of each of the two clamp profiles 21, formed by the segment of the profile joining the upper arm 23 and the lower arm 24, has a slight bulge 29 in the central portion thereof towards the inside of the opening 22. The bulge 29 creates a spring effect. When inserting the pin 10 and the connecting part 20 in the rib 90, the profile of the rib 90 is being deformed, but the controlled travel of the pin 10, as a result of the stop surfaces 17 of the head, causes the profile of the rib 90 to deform when the connecting part 20 presses against the edge of the rib 90. However, when the pin 10 comes out of the cylindrical through hole 91, the deformation disappears.

Furthermore, the bulge 29 causes, upon placing the connecting part in the rib 90, the first contact of the edge of the rib 90 to be at the height of the bulge 29, and not at the upper and lower curved corners of the tube profile of the rib 90. This helps to ensure that the rib 90 is not permanently deformed upon establishing first contact and its curved corners are not marked. The deformation introduced in the profile of the rib 90 is not permanent, but rather elastic, due to the effect of the stop surfaces 17 limiting the travel for introducing the pin 10.

Furthermore, in Figures 7 and 16-17, it can be seen that the lower arm 24 of the clamp profile 21 has an extension 30 in a direction opposite the respective upper arm 23, and that this extension 30 is provided with a through hole 36 or 37, depending on the clamp profile 21, the contour of which has a straight segment and an arch-shaped circumference segment. The through hole 36 has a protuberance similar to the protuberance 33 of the first through hole 27. The through holes 36 and 37 are intended for the placement of a pin 10 therethrough for coupling a plumb to the connecting part 20. The plumb contributes to maintaining the verticality of the formwork panel. The straight segments of the through holes 36 and 37 are inclined such that the pin 10 is positioned angularly in such a way that it can work under shear with the maximum effective section rendered by that position, which minimizes the effects of the loss of section caused by the slot 15.

Imagining that the pin 10 has been introduced by pressing same with a hammer, slightly hitting its lower end upwards from below the rib 90 will cause the pin 10 to quickly spring out of the cylindrical through hole 91 of the rib 90 due to all the spring effects created by the slight bulges 29. This is a matter of touching the pin 10 with the hammer to favor a quick release effect through the spring effect on the tube profile of the rib 90. Each bulge 29 causes the generation of a tendency to eject the coupling of the clamp profiles 21 with respect to the edge or front portion of the rib 90, due to the explained spring effect, and hitting on the pin 10 the slightest from below causes the acceleration of the tendency.

The space between ribs 90 in a formwork panel is limited, in some cases it is 30 cm, so any manipulation with the hammer to disengage the connecting part 20 must be very effective, therefore this quick release system generated by each slight bulge 29 is very advantageous.

How the connecting part 20 is securely coupled to the rib 90 is briefly described below through the sequence shown in Figures 10 to 15. It starts from the position in which the user has placed the connecting part 20 such that the two clamp profiles 21 hold the edge of the segment of the rib 90 having the cylindrical through hole 91 with the bushing 92, and that the first through hole 27 and the second through hole 28 overlap completely or at least to a large extent the cylindrical through hole 91 of the rib 90.

In Figure 10, the lower tip of the pin 10 is introduced through the upper open end of the bushing 92 while going through the first through hole 27 of the connecting part 20 at the same time. The projecting portion 14 is in a standby position, protruding from the cylindrical surface of the cylindrical body 11 of the pin 10. As the pin 10 is pressed downward, the part of the elongated body that goes through the first through hole 27 has a larger cross-section and reaches a point where the straight portion 32 of the first hole contacts the wedge face 12, as in Figure 11. It should also be noted that in Figure 11 there is a separation space between the edge of the rib 90 and the bulges 29 of the clamp profiles 21. If the pin 10 is pressed further, the projecting portion 14 will eventually be compressed when it has to go through the bushing 92, a situation shown in Figure 12. It can be seen that the projecting portion 14 protrudes a very small distance from the cylindrical surface of the pin 10 and that its maximum projecting point is in contact with the inside of the bushing 92. At the same time, the wedge face 12 is in contact with the upper edges 32a and 35a of the two straight segments 32 and 35 of the through holes 27 and 28 of the connecting part 20. In contrast, the circular arc segments 31 and 34 are separated from the cylindrical surface of the pin 10 which they are facing. Upon further pressing, the pin 10 reaches the position of Figure 13, in which it can be seen that the connecting part 20 has moved to the right, pressing more against the edge of the rib 90 (there is no space left between the bottom of the openings 22 and the profile of the rib 90). This is because the projecting portion 14 causes the wedge face 12 to contact and push against the two straight sections 32 and 35, moving them to the right (towards the direction leading to the forming surface of the panel). By introducing the pin 10 further, there will come a time when the projecting portion 14 will come out of the bushing 92 and the second through hole 28, like in Figure 14, and since it is no longer subjected to the compressive force, it will again protrude the specific distance that it protruded in its standby position. **In** Figure 14 there is still certain separation between the cylindrical surface of the pin 10 and the circular arc segments 31 and 34 of the first and second through holes 27 and 28 of the connecting part 20. By pressing further, the pin 10 will reach the position of Figure 15 in which the fitting of the elongated body of the pin 10 with respect to the first and second through holes 27 and 28 is perfect, whereby the pin 10 is actually interlocked and fitted as a result of the wedge face 12. In that position, the circular arc segments 31 and 34 contact a respective cylindrical surface segment of the cylindrical body 11 of the pin 10, with no separation gap, and the wedge face 12 remains in contact with the upper edges 32a and 35a. In the position of Figure 15, the two lower stop surfaces 17 of the head of the pin 10 abut against the upper face of the first attachment plate 25 of the connecting part 20, in the area surrounding the first through hole 27 of this first plate.

To uncouple the pin 10 from the rib 90, it will be necessary to hammer the pin 10 upwards. As explained above, the bulges 29 will contribute to a quick uncoupling, without the profile of the rib 90 being deformed.

## Claims

1. A pin (10) for coupling an accessory (100) to a formwork panel, comprising a head and an elongated body attached integrally to the head, which extends a certain length until ending in a lower end, **characterized in that** the elongated body is formed for the most part by a cylindrical body (11) and by a wedge face (12), configured as a flat face inclined with respect to the longitudinal axis of the cylindrical body, with an inclination such that the wedge face (12) has a greater width at the lower end than at the end closest to the head and such that the distance between the wedge face (12) and the cylindrical surface opposite the wedge face of the elongated body decreases in the direction from the end closest to the head to the lower end, and **in that** the elongated body comprises elastic means (13) configured such that, in a standby state in the absence of external forces, a projecting portion (14) of the elastic means (13) protrudes a specific distance from the cylindrical surface of the cylindrical body (11) opposite the wedge face (12).

2. The pin (10) according to claim 1, **characterized in that** the elastic means (13) are configured such that in a non-standby state in which the projecting portion (14) is subjected to an external compressive force equal to or greater than a predetermined compressive force, all or part of this projecting portion (14) completely or partially enters the inside of the elongated body of the pin (10), and when said force ceases, the projecting portion (14) of the elastic means (13) returns to its standby state, protruding the specific distance from the cylindrical surface of the cylindrical body (11).

3. The pin (10) according to any one of the preceding claims, **characterized in that** the elastic means (13) are a linear spring bent in several segments in which the projecting portion (14) which protrudes from the cylindrical surface of the cylindrical body (11) in the standby state has a curved shape with a maximum between two branches (14a, 14b) of different slope and sign, the slope being smaller in the branch (14b) closer to the lower end of the elongated body.

4. The pin (10) according to any one of the preceding claims, **characterized in that** the elongated body comprises in a segment of the cylindrical surface opposite the wedge face (12) a longitudinal slit or slot (15) in which the elastic means (13) are arranged and from which the projecting portion (14) protrudes in the standby state.

5. The pin (10) according to claim 4, **characterized in that** the longitudinal slit or slot (15) penetrates the wedge face (12) going through same.

6. The pin (10) according to claim 5, **characterized in that** the lower end of the slit or slot (15) is provided with a widening (15a) having dimensions suitable for the passage therethrough of a safety element.

7. The pin (10) according to any one of the preceding claims, **characterized in that** the wedge face (12) has an inclination comprised between 2 and 6 degrees, preferably 4 degrees, with respect to the longitudinal axis of the cylindrical body (11).

8. The pin (10) according to any one of the preceding claims, **characterized in that** the head of the pin (10) is configured as a cylindrical side surface provided with two curved notches (18) opposite one another, in which one notch is provided on the side of the wedge face (12) and the other on the opposite side.

9. The pin (10) according to any one of the preceding claims, **characterized in that** the head of the pin (10) has, at its lower end, at which it is attached to the elongated body of the pin (10), two lower flat stop surfaces (17), projecting in cantilever fashion from the elongated body of the pin (10).

10. A system for coupling an accessory (100) to a formwork panel provided with a rib (90) having a cylindrical through hole (91) vertically going through same, wherein the system comprises a pin (10) according to any one of the preceding claims and a connecting part (20) comprising:
- two clamp profiles (21), flat and parallel to one another, U-shaped, the opening (22) of which has suitable dimensions to receive, by way of fitting, a segment of the front border of a rib (90) of a formwork panel, with the separation distance between the upper arm (23) and the lower arm (24) of the U shape being equal to or greater than the thickness of the rib,
- a first flat attachment plate (25) perpendicular to the two clamp profiles (21), arranged between the two upper arms (23) of the two clamp profiles (21) to which it is integrally attached, provided with a first through hole (27) with a contour suitable for the passage therethrough of the elongated body of the pin (10), and
- a second flat attachment plate (26) perpendicular to the two clamp profiles (21), arranged between the two lower arms (24) of the two clamp profiles (21) to which it is integrally attached, provided with a second through hole (28) with a contour suitable for the passage therethrough of a part of the elongated body of the pin (10).

11. The system according to claim 10, **characterized in that** the first through hole (27) has a contour formed for the most part by a circular arch segment (31) except for a straight segment (32) having a length equal to the maximum width of the wedge face (12) of the elongated body of the pin (10), and wherein approximately in the middle of the circular arch segment (31), the contour has a protuberance (33) having dimensions suitable for the passage therethrough of the most protruding part of the projecting portion (14) of the elastic means of the pin (10).

12. The system according to claim 11, **characterized in that** the second through hole (28) has a circular contour formed for the most part by a circular arch segment (34) except for a straight segment (35) having a length smaller than the length of the straight segment (32) of the contour of the first through hole (27).

13. The system according to claims 11 and 12, **characterized in that** the first through hole (27) and the second through hole (28) are offset relative to one another with respect to the straight segments (32, 35) of the contours thereof in accordance with the inclination of the wedge face (12) of the pin (10) such that an imaginary plane containing the upper edges (32a, 35a) of the two straight segments (32, 35) is parallel to the plane of the wedge face (12) of the pin (10).

14. The system according to any one of claims 11 to 13, **characterized in that** the bottom of the opening (22) of each of the two clamp profiles (21), formed by the segment of the profile joining the upper arm (23) and the lower arm (24), has a bulge (29) in the central portion thereof towards the inside of the opening (22).

15. The system according to any one of claims 11 to 14, **characterized in that** each of the two lower arms (24) of the two clamp profiles (21) has an extension (30) in a direction opposite the respective upper arm (23) which is provided with a through hole (36; 37).

16. The system according to any one of claims 11 to 15, **characterized in that** it comprises at least one rib (90) of a formwork panel, provided with a cylindrical through hole (91) in a direction perpendicular to the upper surface and to the lower surface of the rib (90).

17. The system according to claim 16, **characterized in that** the cylindrical through hole (91) provided in the rib (90) has a cylindrical bushing (92) arranged inside the same.
